Europäisches Patentamt

European Patent Office

Office européen des brevets

(11) Numéro de publication: **0 103 514**
A1

## (12) DEMANDE DE BREVET EUROPEEN

(21) Numéro de dépôt: 83401747.7

(51) Int. Cl.³: **H 04 Q 9/14**, G 08 B 26/00

(22) Date de dépôt: 05.09.83

(30) Priorité: 09.09.82 FR 8215302

(71) Demandeur: **INTERNATIONAL HOME SYSTEMS Société Anonyme dite:, 10-12 rue de Reims, F-75013 Paris (FR)**

(43) Date de publication de la demande: 21.03.84
Bulletin 84/12

(72) Inventeur: **Villain, Roger, 2 Impasse des Ruelles St. Benoist, F-78610 Auffargis (FR)**
Inventeur: **Dannappe, Alain, Central Téléphonique de St. Germain-Les-Corbeil, F-91100 Corbeil (FR)**

(84) Etats contractants désignés: **AT BE CH DE GB IT LI LU NL SE**

(74) Mandataire: **Bonnetat, Christian et al, Cabinet PROPI Conseils 23 rue de Léningrad, F-75008 Paris (FR)**

(54) **Système pour la gestion d'une pluralité de capteurs spatialement répartis.**

(57) Une pluralité de transmetteurs $(T_1, T_2.., T_i.., T_n)$ sont interposé en cascade dans une première ligne (4) réunie à une calculatrice électronique (1), chacun desdits transmetteurs $T_i$ (avec $1 \leqslant i \leqslant n$) étant relié d'une part à au moins un capteur 2 et d'autre part à une seconde ligne (7) commune à tous lesdits transmetteurs et reliée également à ladite calculatrice électronique (1), de façon que, lorsque la calculatrice (17) émet une impulsion de commande (8) sur ladite première ligne (4), cette impulsion (8) se propage de transmetteur en transmetteur du premier $(T_1)$ de ceux-ci jusqu'au dernier $(T_n)$, le temps de séjour de ladite impulsion de commande (8) dans un transmetteur étant utilisable par celui-ci pour transmettre sur ladite seconde ligne (7) vers ladite calculatrice électronique (1) les informations du ou des capteurs (2) associés audit tansmetteur.

0103514

<u>Système pour la gestion d'une pluralité de capteurs</u>
<u>spatialement répartis.</u>

La présente invention concerne un système pour la
gestion d'une pluralité de capteurs spatialement
répartis.

On connaît déjà des systèmes, par exemple pour la surveillance de locaux, comportant une pluralité de capteurs destinés à détecter divers paramètres de ces locaux (incendie, température, présence étrangère, etc...)
et répartis en des endroits qui peuvent être éloignés
les uns des autres. Dans une première famille de ces
systèmes connus, en vue de la gestion centralisée des
informations provenant desdits capteurs, on prévoit une
calculatrice électronique en liaison avec lesdits capteurs par l'intermédiaire d'une ligne-bus à laquelle
ceux-ci sont tous reliés par l'intermédiaire de
codeurs-décodeurs. Ainsi, lorsque la calculatrice électronique veut connaître l'état de l'un desdits capteurs,
elle émet sur la ligne-bus un signal comportant une
adresse spécifique dudit capteur, de sorte que le
codeur-décodeur associé à celui-ci est le seul à réagir
au signal et à permettre la transmission vers la calculatrice électronique des informations émises par ledit
capteur.

De tels systèmes présentent l'inconvénient de nécessiter des câbles spéciaux pour la réalisation de la
ligne-bus à cause du grand nombre d'informations à
transmettre et de consommer pour leur fonctionnement une
énergie relativement importante.

Dans une seconde famille de systèmes de détection connus, tels que celui décrit dans le document WO-A-
8 101 624, on met en oeuvre une structure en cascade
connue du type de celle décrite dans les documents
FR-A-2 159 630, US-A-3 761 878 et GB-A-2 055 235.

Ces systèmes connus de la seconde famille comprennent également une calculatrice électronique et une ligne reliant celle-ci auxdits capteurs et ils comportent une pluralité de transmetteurs interposés en cascade dans une première ligne réunie à ladite calculatrice électrique, chacun desdits transmetteurs étant relié d'une part à au moins un capteur et d'autre part à une seconde ligne commune à tous lesdits transmetteurs et reliée également à ladite calculatrice électronique, de façon que, lorsque la calculatrice émet une impulsion de commande sur ladite première ligne, cette impulsion se propage de transmetteur en transmetteur du premier de ceux-ci jusqu'au dernier, le temps de séjour de ladite impulsion de commande dans un transmetteur étant utilisable par celui-ci pour transmettre sur ladite seconde ligne vers ladite calculatrice électronique les informations du ou des capteurs associés audit transmetteur.

Ainsi, dans ces systèmes connus, l'impulsion de commande se propage pas-à-pas (c'est-à-dire transmetteur par transmetteur) le long de la première ligne et, à chaque pas, les informations du ou des capteurs associés au transmetteur au niveau duquel se trouve l'impulsion de commande peuvent être transmises sur la seconde ligne en direction de la calculatrice électronique.

On remarquera donc que, dans un tel système connu de la seconde famille, d'une part, la calculatrice électronique n'a pas à émettre l'adresse spécifique des capteurs, de sorte que la structure de ladite première ligne peut être plus simple, et, d'autre part, à un instant donné un seul transmetteur émet sur la seconde ligne, de sorte que la consommation d'énergie du système peut être plus faible.

Cependant, ces systèmes connus de la seconde famille présentent, à cause de leur structure même, l'inconvénient de ne pouvoir transmettre immédiatement des informations urgentes provenant d'un de leurs capteurs : en effet, il est nécessaire d'attendre que les détecteurs précédents aient été interrogés, au rythme de déroulement du processus d'interrogation et même s'ils n'ont rien à dire, pour que la transmission des informations urgentes puisse avoir lieu.

La présente invention a pour but de remédier à cet inconvénient et de permettre de réaliser un système pour la gestion séquentielle d'une pluralité de capteurs à faible consommation électrique, utilisant des câbles standards de structure simple et pouvant transmettre pratiquement immédiatement des informations urgentes provenant d'un desdits capteurs.

A cette fin, selon l'invention, le système pour la gestion d'une pluralité de capteurs spatialement répartis, comportant une calculatrice électronique et une ligne reliant celle-ci auxdits capteurs, ainsi qu'une pluralité de transmetteurs interposés en cascade dans une première ligne réunie à ladite calculatrice, chacun desdits transmetteurs étant relié d'une part à au moins un capteur et d'autre part à une seconde ligne commune à tous lesdits transmetteurs et reliée également à ladite calculatrice électronique, de façon que, lorsque la calculatrice émet une impulsion de commande sur ladite première ligne, cette impulsion se propage de transmetteur en transmetteur du premier de ceux-ci jusqu'au dernier, le temps de séjour de ladite impulsion de commande dans un transmetteur étant utilisable par celui-ci pour transmettre sur ladite seconde ligne vers ladite calculatrice électronique les informations du ou des capteurs associés audit transmetteur, est caractérisé en ce que l'émission, sur ladite seconde ligne, par un transmetteur, d'informations en provenance des capteurs associés n'a lieu que si ces informations ont été modifiées depuis l'émission précédente et, en cas d'identité entre les informations actuelles et les informations précédentes, l'impulsion de commande est transmise immédiatement au transmetteur suivant.

Ainsi, le temps d'interrogation d'une boucle est considérablement réduit et seuls les capteurs ayant changé d'état émettent leurs informations, de sorte que les informations urgentes parviennent sans retard à la calculatrice.

A cet effet, dans ce cas, un transmetteur peut comporter une première porte logique ET dont les entrées reçoivent respectivement l'impulsion de commande incidente et le résultat de la comparaison entre les informations actuelles et les informations antérieures en provenance des capteurs associés au transmetteur, un dispositif de sérialisation pourvu d'une pluralité d'entrées en parallèle reliées auxdits capteurs et d'une sortie série reliée à ladite seconde ligne, une horloge dont l'entrée de commande de mise en marche est reliée à la sortie de ladite première porte ET et qui commande elle-même la mise en marche dudit dispositif de sérialisation et un générateur d'impulsion de commande dont l'entrée est reliée, à travers une porte OU, au dispositif de sérialisation pour être actionné par la fin de la dernière information émise et dont la sortie est connectée à la partie aval de ladite première ligne, ledit transmetteur comportant de plus une seconde porte ET dont les entrées reçoivent respectivement l'impulsion de commande incidente et la sortie inversée de ladite première porte ET et dont la sortie commande ledit générateur d'impulsion à travers ladite porte OU.

0103514

5

Bien entendu, il est avantageux que chaque transmetteur puisse, au choix, fonctionner soit selon le mode spécifique de l'invention, soit selon un mode pouvant être qualifié de systématique, dans lequel le temps de séjour de l'impulsion de commande dans un transmetteur est systématiquement utilisé pour adresser à la calculatrice électronique les informations en provenance du ou des capteurs correspondants, et la transmission de l'impulsion de commande au transmetteur suivant est commandée par la fin de l'émission desdites informations. Aussi, le système selon l'invention comporte une troisième ligne reliée à la calculatrice et à chacun des transmetteurs et véhiculant un signal émis par ladite calculatrice imposant auxdits transmetteurs l'un ou l'autre desdits fonctionnements.

Il est indispensable dans ce cas que chaque transmetteur comporte des moyens qui, dans le cas où il émettait sur ladite seconde ligne des informations en provenance desdits capteurs au moment où un changement de mode de fonctionnement est commandé par ladite troi-

6

sième ligne, stoppent la transmission de ladite impulsion de commande correspondant au mode de fonctionnement antérieur et l'emmagasinent pour ne la transmettre au transmetteur suivant que si la commande d'un second changement de mode intervient pour rétablir ledit mode de fonctionnement antérieur.

Un mode de réalisation de transmetteur avantageux à cet effet comporte une première porte logique de type ET dont les entrées reçoivent respectivement l'impulsion de commande incidente et le résultat d'une comparaison entre les informations actuelles et les informations antérieures en provenance des capteurs associés, une troisième porte logique de type ET dont les entrées reçoivent respectivement l'impulsion de commande incidente et l'ordre véhiculé par ladite troisième ligne, un dispositif de sérialisation pourvu d'une pluralité d'entrées en parallèle reliées auxdits capteurs et d'une sortie reliée à ladite seconde ligne, une horloge de commande dont l'entrée de commande de mise en marche est reliée à la sortie d'une seconde porte logique de type OU dont les entrées sont respectivement reliées aux sorties desdites première et troisième portes logiques, l'horloge commandant la mise en marche dudit dispositif de sérialisation, et un générateur d'impulsion de commande dont l'entrée est reliée, à travers une première porte logique de type OU, au dispositif de sérialisation pour être actionné par la fin de la dernière information émise et dont la sortie est connectée à la partie aval de ladite première ligne, ledit transmetteur comportant de plus une seconde porte de type ET dont les entrées reçoivent respectivement la sortie d'une quatrième porte logique de type ET et la sortie inversée de ladite seconde porte logique de type OU et dont la sortie commande ledit générateur d'impulsion à travers ladite première porte logique OU, les entrées de ladite quatrième porte logique ET recevant respectivement l'ordre inversé circulant sur ladite troisième ligne de commande et l'impulsion de commande incidente.

Par ailleurs, pour pouvoir en cas de rupture de la chaîne de transmetteurs déterminer l'emplacement de cette rupture, il est avantageux que la calculatrice puisse émettre son impulsion de commande dans les deux sens de ladite première ligne. Ainsi, elle peut connaître le dernier transmetteur qui émet pour chaque sens de circulation de l'impulsion de commande et donc déterminer avec précision l'emplacement de ladite rupture.

Les figures du dessin annexé feront bien comprendre comment l'invention peut être réalisée.

La figure 1 est une vue schématique d'ensemble d'un système du type auquel appartient l'invention.

La figure 2 donne le schéma synoptique d'un mode de réalisation simplifié de transmetteur pour le système de la figure 1.

La figure 3 donne le schéma synoptique d'une variante de réalisation plus complexe de transmetteur pour le système de la figure 1.

Les figures 4 et 5 donnent le schéma synoptique de modes de réalisation préférés de transmetteur pour le système de la figure 1.

Sur ces figures, des références identiques désignent des éléments semblables.

Le système selon l'invention a pour objet la gestion centralisée, au moyen d'une calculatrice électronique 1, d'une pluralité de capteurs 2, semblables ou différents, constitués par exemple de détecteurs d'incendie, de détecteurs de température, de contacteurs,.etc...

Les divers capteurs 2 sont répartis spatialement en différents lieux distincts les uns des autres et, isolément ou par groupes, ils sont reliés à des transmetteurs $T_1$, $T_2$,...$T_i$,...$T_n$.

Les $\underline{n}$ transmetteurs $T_i$ (avec $1 \leqslant i \leqslant n$) sont tous identiques et ils sont commandés par la calculatrice 1 par l'intermédiaire d'un dispositif d'interface 3 et d'une ligne de commande 4. La ligne de commande est bouclée sur le dispositif d'interface 3 entre deux bornes 5 et 6 de celui-ci et la pluralité des transmetteurs $T_i$ est montée en série ou cascade sur ladite ligne de commande 4. Par ailleurs, chacun des $\underline{n}$ transmetteurs $T_i$ est branché sur une ligne 7, commune à tous les transmetteurs et aboutissant au dispositif interface 3.

Le principe de base du système selon l'invention est le suivant :

La calculatrice 1, par l'intermédiaire du dispositif d'interface 3, émet, par exemple sur la borne 5 une impulsion de commande 8 se déplaçant dans le sens $f_1$. Lorsqu'elle atteint le premier transmetteur $T_1$ de la pluralité des n transmetteurs $T_i$ en série, l'impulsion 8 déclenche ledit transmetteur $T_1$, de sorte que celui-ci adresse au dispositif d'interface 3, par l'intermédiaire de la ligne 7, l'état du ou des capteurs 2 qui lui sont associés. Lorsque le transmetteur $T_1$ a transmis l'état de la totalité de ses capteurs 2, il adresse au transmetteur suivant $T_2$, par l'intermédiaire de la ligne 4, l'impulsion de commande 8 (ou une impulsion semblable) et, à son tour, le transmetteur $T_2$ émet sur la ligne 7, à l'adresse du dispositif d'interface 3, l'état des capteurs 2 qu'il surveille. Un processus identique se repète en se propageant d'un transmetteur au suivant, jusqu'au dernier transmetteur $T_n$ qui adresse l'impulsion 8 sur la borne 6 du dispositif d'interface 3. La calculatrice électronique 1 sait donc que le cycle en cours est terminé et un nouveau cycle, commençant par la commande du transmetteur $T_1$, peut alors être effectué.

On voit que l'on peut ainsi assurer de façon séquentielle et successive la surveillance de la pluralité des capteurs 2.

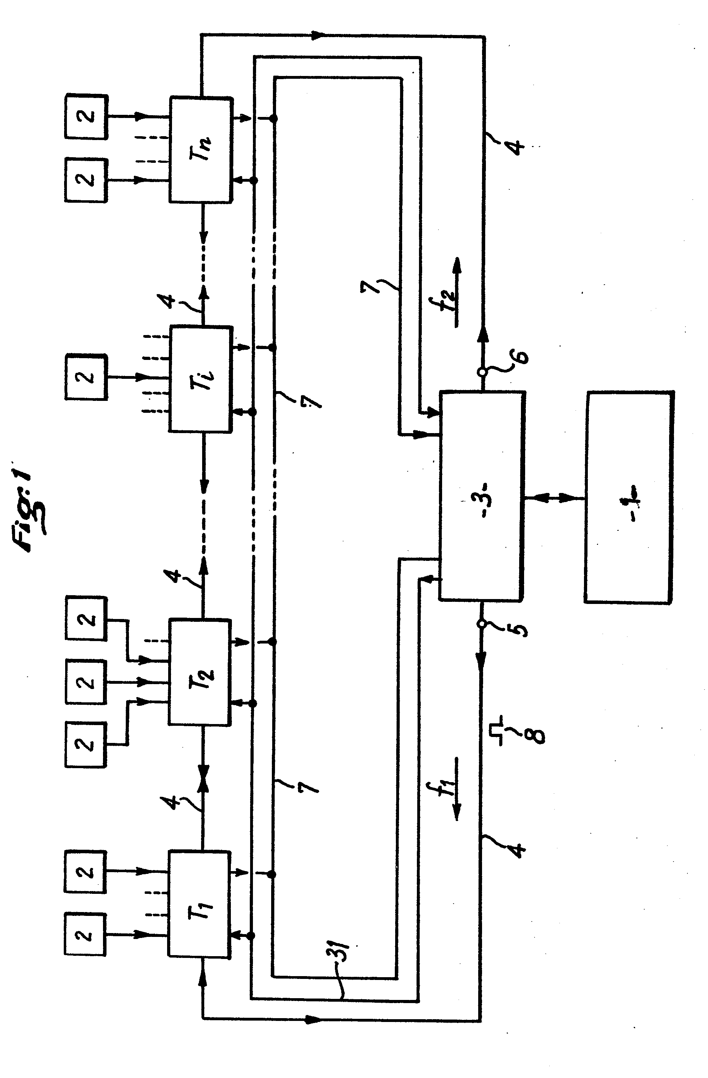

De préférence, afin de réduire au maximum la consommation du système de la figure 1, les différents transmetteurs $T_i$ sont normalement au repos et ne sont mis au travail que sur la réception de l'impulsion de commande 8.

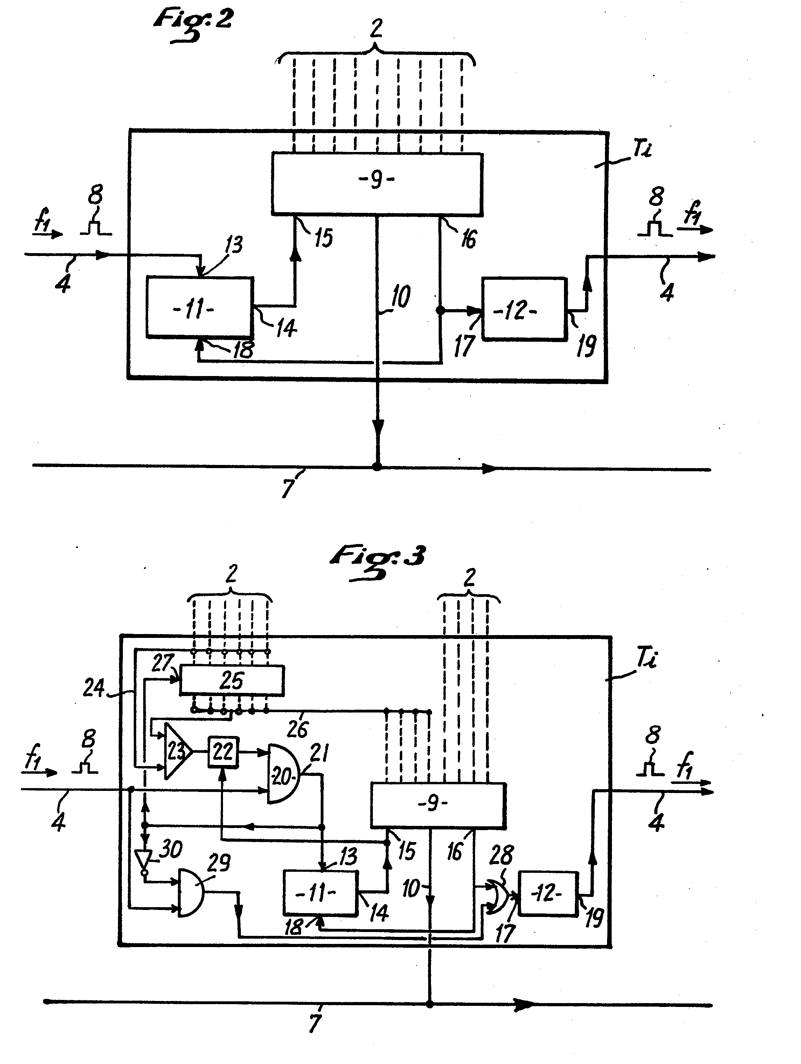

Sur la figure 2, on a représenté le schéma synoptique d'un transmetteur $T_i$ simplifié.

Ce transmetteur comporte un dispositif de sérialisation 9 recevant des différents capteurs 2 reliés au transmetteur correspondant les différentes informations (état des capteurs + adresse de chacun de ceux-ci) et permettant d'émettre celles-ci en série sur la ligne 7. Pour cela la pluralité des entrées du dispositif de sérialisation 9 sont reliées aux sorties des différents capteurs 2, tandis que la sortie 10 dudit dispositif de sérialisation 9 est réunie à la ligne 7. Le transmetteur $T_i$ comporte de plus une horloge 11 et un générateur d'impulsion 12. L'entrée de commande de mise en marche 13 de l'horloge 11 est reliée à la partie amont de la ligne 4, tandis que sa sortie de commande 14 est connectée à l'entrée de commande 15 du dispositif de sérialisation 9. Par ailleurs, celui-ci comporte une sortie de commande 16 reliée d'une part à l'entrée de commande 17 du générateur d'impulsion 12 et d'autre part à l'entrée de commande d'arrêt 18 de l'horloge 11. Enfin, la sortie 19 du générateur 12 est reliée à la partie aval de la ligne de commande 4.

Ainsi, lorsque l'impulsion 8 arrive sur l'entrée 13 de l'horloge 11 celle-ci se met en marche et commande par sa sortie 14 le dispositif de sérialisation 9 qui émet, à sa sortie 10 et donc sur la ligne 7 en direction du dispositif d'interface 3, les informations en provenance des capteurs 2. A la fin de la dernière information transmise, le dispositif de sérialisation 9 émet à sa sortie 16 un signal qui arrête le fonctionnement de l'horloge 11 et qui donne l'ordre au générateur 12 d'engendrer à sa sortie 19 une impulsion de commande 8. Ainsi, tout se passe comme si l'impulsion de commande 8 incidente avait été retardée dans sa transmission

par le transmetteur $T_i$ du temps nécessaire à celui-ci pour transmettre les informations en provenance des capteurs 2 associés.

On remarquera que dans ce mode de réalisation de la figure 2, les informations de tous les capteurs 2 reliés à un transmetteur $T_i$ sont systématiquement adressés au dispositif d'interface 3, qu'elles aient varié ou non depuis la dernière lecture.

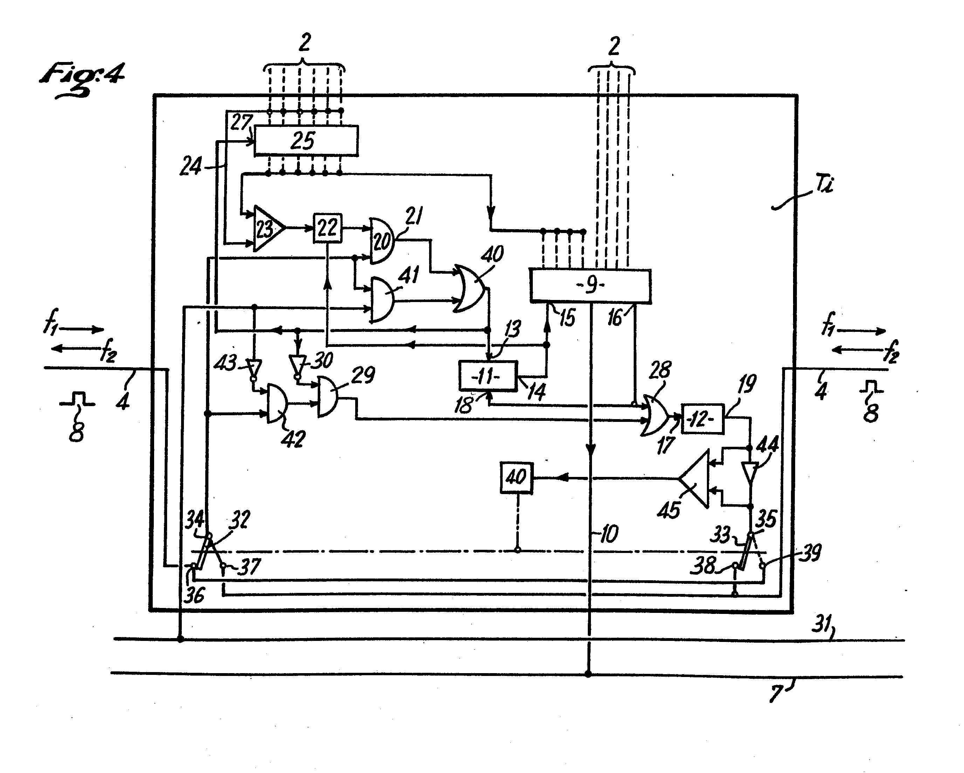

Dans certains cas, au contraire, pour gagner du temps, et diminuer la consommation d'énergie, il peut être avantageux de ne procéder à une telle émission que si les informations des capteurs 2 ont changé depuis la lecture précédente. La figure 3 montre un exemple de réalisation de transmetteur $T_i$ permettant ce mode de fonctionnement.

Dans l'exemple de réalisation du transmetteur $T_i$ montré par la figure 3, on retrouve l'agencement des éléments 9 à 19 de la figure 2. Comme précédemment, la sortie 19 du générateur 12 est reliée à la partie aval de la ligne 4, cependant l'entrée de commande 13 de l'horloge 11 et les entrées du dispositif de sérialisation 9 ne sont plus reliées de la même façon, respectivement à la partie amont de la ligne 4 et aux capteurs 2. De plus, la sortie de commande 16 du dispositif de sérialisation 9 au lieu d'être reliée directement à l'entrée de commande 17 du générateur 12 est réunie à l'une des entrées d'une porte logique 28 de type OU dont la sortie est reliée à ladite entrée 17.

Comme on peut le voir sur la figure 3, la partie amont de la ligne de commande 4 est reliée à l'une des entrées d'une porte logique 20 de type ET, dont la sortie
21 est réunie à l'entrée de commande de mise en marche
13 de l'horloge 11.

L'autre entrée de la porte 20 est reliée, éventuellement par l'intermédiaire d'une mémoire temporaire 22
(remise à zéro par la sortie 15 de l'horloge 11), à la
sortie d'un dispositif de comparaison 23.

Les informations, provenant des capteurs 2 et concernant les états de ceux-ci, sont adressées, d'une part
directement à l'une des entrées du dispositif de
comparaison 23 et au dispositif de sérialisation 9,
d'autre part à une mémoire 25, dont la sortie 26 est
réunie à l'autre entrée dudit dispositif de comparaison
23. Par ailleurs, d'autres entrées parallèles du
dispositif de sérialisation 9 reçoivent directement des
capteurs 2, les informations correspondant aux adresses
de ceux-ci. L'entrée 27 de commande de mémorisation de
la mémoire 25 est réunie à la sortie 21 de la porte ET
20.

L'autre entrée de la porte OU 28 (celle qui n'est pas
reliée à la sortie 16 du dispositif de sérialisation 9)
est alimentée par la sortie d'une autre porte logique
ET, qui est désignée par la référence 29 et dont une
entrée est reliée à la sortie 21 de la porte ET 20,
par l'intermédiaire d'un inverseur 30, l'autre entrée
de cette porte 29 étant réunie à la partie amont de la
ligne 4.

Ainsi, à chaque instant le dispositif de comparaison 23 peut comparer l'état actuel des capteurs 2 (fourni par la liaison 24) à l'état juste antérieur de ceux-ci (fourni par la sortie 26 de la mémoire 25).

Si l'état actuel et l'état antérieur des capteurs sont identiques, la sortie du dispositif de comparaison 23 est à zéro, de sorte que l'entrée correspondante de la porte 20 est également à zéro. Par suite, lorsque l'impulsion de commande 8 arrive sur l'autre entrée de ladite porte 20, elle est arrêtée par cette dernière et l'entrée de commande 13 de l'horloge 11 ne peut être alimentée. Il en résulte que l'ensemble des éléments 9 à 19 est bloqué.

Cependant, les deux entrées de la porte ET 29 sont alors alimentées, de sorte que ladite porte est conductrice et alimente l'entrée correspondante de la porte OU 28. L'entrée de commande 17 du générateur 12 reçoit donc un ordre et une impulsion 8 est émise sur la partie aval de la ligne de commande 4, vers le transmetteur $T_{i+1}$ suivant.

Ainsi, dans les cas où l'état des capteurs 2 ne s'est pas modifié depuis la lecture précédente, la transmission des informations en provenance des capteurs 2 n'a pas lieu et l'impulsion de commande 8 est transmise sans tarder au transmetteur suivant.

En revanche, si l'état actuel et l'état antérieur des capteurs sont différents, à la sortie du dispositif de comparaison 23 apparaît un signal, de sorte que l'entrée correspondante de la porte 20 est alimentée. Par suite, lorsqu'une impulsion de commande 8 arrive sur l'autre entrée de la porte 20, un signal apparaît à la

0103514

sortie 21 de celle-ci, ce qui a pour effet de bloquer la porte 29 et de mettre en marche l'horloge 11. L'ensemble 9 à 19 fonctionne donc de la manière décrite en regard de la figure 2 et une impulsion 8 est émise sur la portion aval de la ligne de commande 4, après la fin de la transmission de la dernière information émise sur la sortie 10 et réception par l'entrée 17 du générateur 12 du signal correspondant en provenance de la sortie 16, à travers la porte OU 28.

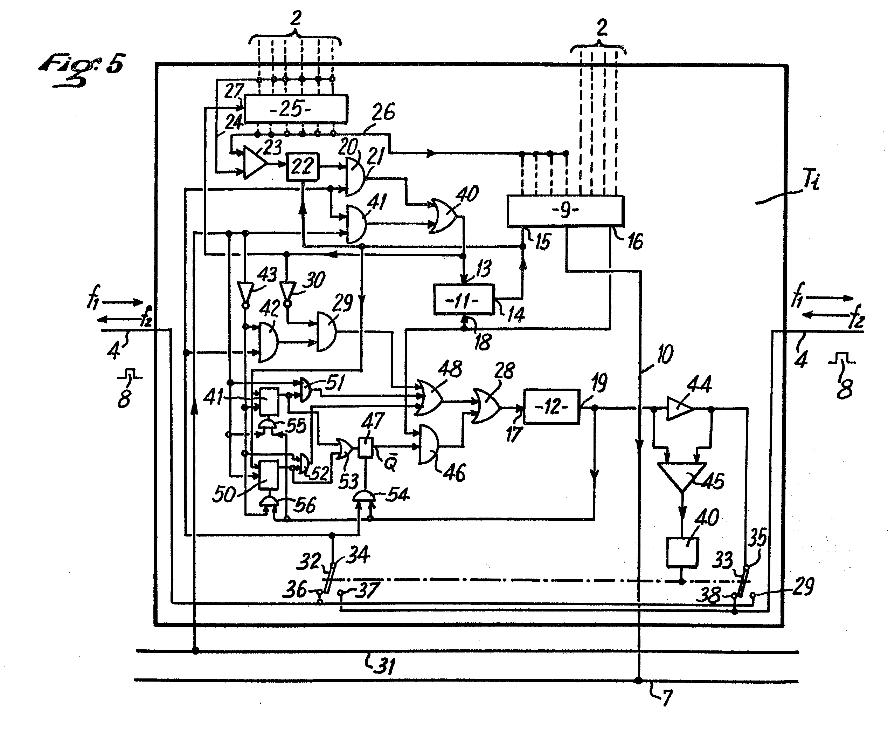

Comme mentionné ci-dessus, il est avantageux que les transmetteurs $T_i$ puissent fonctionner au choix, soit comme les transmetteurs $T_i$ de la figure 2, soit comme ceux de la figure 3. De plus, il est intéressant que les impulsions de commande 8 puissent circuler dans la première ligne 4 soit dans le sens $f_1$ de la figure 1, soit dans le sens opposé $f_2$. Pour ce faire, d'une part on prévoit une troisième ligne 31 (voir la figure 1) reliée au dispositif d'interface 3 et à chacun des transmetteur $T_i$ et véhiculant des instructions émises par la calculatrice électronique 1 et concernant le mode de fonctionnement désiré pour lesdits transmetteurs et, d'autre part, on peut donner à chacun des transmetteurs $T_i$ la structure illustrée par la figure 4.

Le mode de réalisation de la figure 4 comporte pour l'essentiel la combinaison des éléments 9 à 30 décrite ci-dessus en regard de la figure 3, légèrement adaptée pour être couplée à un double inverseur et à la ligne de commande 4.

Le double inverseur, représenté sous la forme de contacts basculants pour la commodité de l'explication, mais pouvant bien entendu présenter la structure d'un composant solide, comporte deux contacts 32 et 33 reliés d'une part respectivement à un plot commun 34 ou 35 et pouvant basculer entre des plots 36 et 37 ou 38 et 39 respectivement. Les deux contacts basculants 32 et 33 sont couplés et sont commandés par un dispositif de commande 40.

Le plot 36, associé au contact 32, et le plot 39, associé au contact 33, sont électriquement reliés l'un à l'autre et à la partie de gauche (par rapport à la figure 4) de la ligne 4. En revanche, le plot 37, associé au contact 32, et le plot 38, associé au contact 33, sont électriquement reliés l'un à l'autre et à la partie de droite (par rapport à la figure 4) de la ligne 4. Par ailleurs, le couplage entre les contacts 32 et 33 est tel que lorsque le contact 32 assure la conduction entre les plots 34 et 36, le contact 33 assure la conduction entre les plots 35 et 38, et que lorsque le contact 32 assure la conduction entre les plots 34 et 37, le contact 33 assure la conduction entre les plots 35 et 39, et vice-versa.

Entre la sortie 21 de la porte ET 20 et l'entrée 13 de l'horloge 11, est intercalée une porte logique 40 de type OU, de façon que ladite entrée 13 soit reliée à la sortie de ladite porte 40, tandis qu'une entrée de celle-ci est reliée à ladite sortie 21.

L'autre entrée de la porte OU 40 est reliée à la sortie d'une porte logique 41 de type ET. Une entrée de la porte 41 et l'entrée de la porte 20, qui était réunie à la ligne 4, sont reliées au plot commun 34 du contact basculant 32. L'autre entrée de la porte 41 est reliée à la ligne 31. De plus, l'entrée de la porte 29 qui était reliée à la ligne 4, est connectée à la sortie d'une porte logique 42 de type ET, dont une entrée est reliée à la ligne 31 à travers un inverseur 43 et dont l'autre entrée est reliée au plot commun 34 du contact basculant 32.

Par ailleurs, la sortie 19 du générateur d'impulsions 12 est reliée au plot commun 35 du contact basculant 33 par l'intermédiaire d'un composant unidirectionnel 44, par exemple, un amplificateur de gain unitaire, aux bornes duquel est branché un comparateur 45 dont la sortie commande le dispositif 40, d'actionnement des contacts basculants 32 et 33.

Lorsque les contacts 32 et 33 occupent la position représentée en traits pleins sur la figure 4, et qu'une impulsion de commande 8, circulant sur la partie gauche de la ligne 4, atteint le transmetteur $T_i$, une impulsion correspondante 8 est émise par le générateur 12, de la façon décrite ci-dessus. Cette impulsion émise 8 est présente sur les deux entrées du comparateur 45, de sorte que le signal de sortie de celui-ci est nul et que le dispositif 40 n'est pas commandé. Les contacts 32 et 33 restent dans la position représentée et l'impulsion 8 émise par le générateur 12 est transmise à la partie de droit de la ligne 4 et y circule dans le sens $f_1$.

En revanche, si une impulsion de commande 8 est transmise au transmetteur $T_i$, dans le sens $f_1$, par la partie gauche de la ligne 4 et si les contacts basculants occupent la position représentée en pointillés sur la figure 4, cette impulsion ne peut actionner le transmetteur $T_i$ de sorte qu'aucune impulsion n'est émise par le générateur 12 et que l'entrée correspondante du comparateur 45 n'est pas alimentée. Cependant, l'impulsion incidente arrive sur le plot 39, de sorte que l'entrée correspondante du comparateur 45 est alimentée. Il en résulte que le dispositif 40 fait basculer les contacts 32 et 33 pour leur faire prendre la position en traits pleins.

On remarquera que, symétriquement, si une impulsion de commande 8 circule dans le sens $f_2$ le long de la partie droite de la ligne 4, le transmetteur $T_i$ émettra une impulsion de commande 8 (dans le sens $f_2$) sur la partie gauche de la ligne 2, éventuellement après avoir fait basculer les contacts 32 ett 33 pour les faire passer dans la position en traits pointillés, s'ils étaient initialement dans la position en traits pleins.

Le transmetteur $T_i$ de la figure 4 est donc utilisable pour les deux sens de transmission $f_1$ et $f_2$ de l'impulsion de commande 8.

De plus, le mode de fonctionnement de ce transmetteur $T_i$ peut être choisi grâce à la ligne 31.

Si, par exemple, sur la ligne 31, le dispositif d'interface 3 envoie un signal 1, la porte ET 42 est bloquée, à cause de la présence de l'inverseur 43. Par suite, la porte 29 est elle-même bloquée et elle ne peut alimenter la porte 28. Si de plus, une impulsion de commande 8 arrive sur le plot 34, la porte 41 est conductrice de sorte que l'horloge 11 est mise en marche et qu'il en résulte l'émission d'une impulsion de commande 8 par le générateur 12, selon le processus décrit ci-dessus. Le transmetteur $T_i$ de la figure 4 a donc alors un fonctionnement systématique semblable à celui du dispositif de la figure 2.

En revanche, si sur la ligne 31 le dispositif d'interface 3 impose un signal 0, et si une impulsion de commande 8 apparaît sur le plot 32, la porte 42 est passante et l'état de la porte 29 dépend du changement d'état des capteurs 2. S'il y a changement d'état, l'inverseur 30 bloque la porte 29, mais la commande de l'horloge 11 se fait à travers la porte 40. S'il n'y a pas changement d'état, la porte 29 commande directement le générateur 12, à travers la porte 28.

Ainsi, dans ce cas, le transmetteur $T_i$ de la figure 4 se comporte comme celui de la figure 3 et n'émet des informations sur la ligne 7 que si un changement d'état est intervenu depuis la précédente émission.

Le transmetteur de la figure 4 peut donc, indifféremment, fonctionner soit en émission systématique, soit en émission sur changement d'état des capteurs 2. Cependant, les deux types de fonctionnement doivent être séparés et ne peuvent être enchevêtrés car alors des défauts de report de l'impulsion de commande 8 pourraient se produire.

Le transmetteur $T_i$, de la figure 5, permet en tant que de besoin, l'enchevêtrement des deux modes de fonctionnement. Il comporte, pour l'essentiel, la combinaison des éléments 9 à 45 du transmetteur de la figure 4.

Dans le mode de réalisation de la figure 5, l'entrée de la porte 28, qui, dans le transmetteur de la figure 4 était reliée à la sortie 16 du dispositif de sérialisation 9, est réunie à la sortie d'une porte ET 46 dont une entrée est reliée à ladite sortie 16, l'autre des entrées de la porte 46 étant reliée à la sortie d'une bascule 47. De plus, l'entrée de la porte 28, qui dans le transmetteur de la figure 4 était reliée à la sortie de la porte 29 est connectée à la sortie d'une porte OU 48, dont l'une des entrées est reliée à la sortie de ladite porte 29.

Le transmetteur de la figure 5 comporte de plus deux bascules 49 et 50 recevant le signal d'horloge provenant de la sortie 14 et le signal circulant sur la ligne 31 de sélection de mode de fonctionnement, ce signal étant inversé par l'inverseur 43 pour la bascule 49. Les sorties des bascules 49 et 50 sont reliées aux entrées des portes ET 51 et 52, respectivement, dont les autres entrées reçoivent, également respectivement, le signal de la ligne 31 et le signal inverse. Les sorties des portes 51 et 52 sont reliées à deux autres entrées de la porte OU 48.

En outre, les sorties des bascules 49 et 50 sont reliées aux entrées d'une porte OU 53, commandant la bascule 47.

Enfin des portes ET 54, 55 et 56 sont prévues pour la remise à zéro des bascules 47, 49 et 50 respectivement.

Une entrée de chacune desdites portes 54, 55 et 56 est reliée à la sortie 19 du générateur 12, l'autre entrée étant reliée au plot 34 pour la porte 54, à la ligne 31 pour la porte 55 et à la sortie de l'inverseur 43 pour la porte 56.

Pour expliquer le fonctionnement de l'ensemble 46 à 56 de la figure 5, on suppose à titre d'exemple que le transmetteur $T_i$ était en fonctionnement systématique et qu'il passe en fonctionnement à émission sur changement d'état des capteurs 2, c'est-à-dire que l'état de
la ligne 31 passe de 1 à 0.

Si le transmetteur $T_i$ était au repos, les bascules 49
et 50 restent au repos. En revanche, si le transmetteur
est en fonctionnement au moment du changement d'état de
la ligne 31, la sortie 14 de l'horloge 11 est alimentée
et la sortie de l'inverseur 43 est au niveau 1. On
positionne donc la bascule 49 et on commande la bascule
47 grâce à la porte 53. La porte 46 est bloquée et, en
fin d'émission du dispositif de sérialisation 9 sur la
ligne 7, l'ordre d'émission provenant de la sortie 16
ne peut être transmise au générateur 12. L'impulsion 8
n'est donc pas transmise vers le transmetteur suivant.

Dès que l'état de la ligne 31 repasse de 0 à 1, la porte 51 est débloquée et elle est passée l'information
mémorisée dans la bascule 49, qui, à travers les portes
48 et 28 actionne le générateur 12, de sorte que
celui-ci émet l'impulsion 8 du mode systématique qui
n'avait pas été transmise lors du passage de la ligne
31 de l'état 1 à l'état 0.

De même, si la ligne 31 est initialement à l'état 0
(fonctionnement sur changement d'état des capteurs 2)
et que cet état passe sur commande à l'état 1, deux
cas se présentent. Si le transmetteur est au repos, il
y reste.

S'il était au travail, la bascule 50 est positionnée et
tout se passe de manière identique à ce qui est décrit
ci-dessus à propos du changement d'état de 1 à 0 de la
ligne 31.

Ainsi, dans le transmetteur de la figure 5, l'impulsion de commande correspondant au mode de fonctionnement prévalant au moment d'une commande de changement de mode de fonctionnement est emmagasinée jusqu'à une seconde commande de changement de mode, qui permet sa transmission au transmetteur suivant.

REVENDICATIONS

1.- Système pour la gestion d'une pluralité de capteurs (2) spatialement répartis, comportant une calculatrice électronique (1) et une ligne reliant celle-ci auxdits capteurs (2), ainsi qu'une pluralité de transmetteurs $T_1$, $T_2$.., $T_i$..,$T_n$ interposés en cascade dans une première ligne (4) réunie à ladite calculatrice électronique (1), chacun desdits transmetteurs $T_i$ (avec $1 \leqslant i \leqslant n$) étant relié d'une part à au moins un capteur (2) et d'autre part à une seconde ligne (7) commune à tous lesdits transmetteurs et reliée également à ladite calculatrice électronique (1), de façon que, lorsque la calculatrice (1) émet une impulsion de commande (8) sur ladite première ligne (4), cette impulsion (8) se propage de transmetteur en transmetteur du premier $T_1$ de ceux-ci jusqu'au dernier $T_n$, le temps de séjour de ladite impulsion de commande (8) dans un transmetteur étant utilisable par celui-ci pour transmettre sur ladite seconde ligne (7) vers ladite calculatrice électronique (1) les informations du ou des capteurs (2) associés audit transmetteur, caractérisé en ce que l'émission, sur la seconde ligne (7), par un transmetteur $T_i$ d'informations en provenance des capteurs associés (2) n'a lieu que si ces informations ont été modifiées depuis l'émission précédente et, en cas d'identité entre les informations actuelles et les informations précédentes, l'impulsion de commande (8) est transmise immédiatement au transmetteur $T_{i+1}$ suivant.

2.- Système selon la revendication 1, caractérisé en ce qu'il comporte une troisième ligne (31) reliant ladite calculatrice électronique (1) auxdits transmetteurs $T_1$ à $T_n$ et en ce que ladite calculatrice électronique 1 émet sur ladite troisième ligne (31) des ordres permettant auxdits transmetteurs de tous fonctionner au choix, soit de façon que le temps de séjour de l'impulsion de commande (8) dans un transmetteur $T_i$ soit systématiquement utilisé pour adresser à la calculatrice électronique (1) les informations en provenance du ou des capteurs (2) correspondants et que la transmission de l'impulsion de commande (8) au transmetteur $T_{i+1}$ suivant soit commandée par la fin de l'émission desdites informations sur ladite seconde ligne (7), soit de façon que l'émission sur la seconde ligne (7) par un transmetteur $T_i$ d'informations en provenance des capteurs associés (2) n'ait lieu que si ces informations ont été modifiées depuis l'émission précédente et que, en cas d'identité entre les informations précédentes, l'impulsion de commande (8) soit immédiatement transmise au transmetteur suivant $T_{i+1}$.

3.- Système selon la revendication 2, caractérisé en ce que chaque transmetteur $T_i$ comporte des moyens qui, dans le cas où il émettait sur ladite seconde ligne (7) des informations en provenance desdits capteurs (2) au moment où un changement de mode de fonctionnement est commandé par ladite troisième ligne (31), stoppent la transmission de ladite impulsion de commande (8) correspondant au mode de fonctionnement antérieur et l'emmagasinent pour ne la transmettre au transmetteur suivant que si la commande d'un second changement de mode intervient pour rétablir ledit mode de fonctionnement antérieur.

24  0103514

4.- Système selon la revendication 1, caractérisé en ce que la structure de chaque transmetteur $T_i$ est symétrique pour pouvoir recevoir et transmettre ladite impulsion de commande (8) dans les deux sens de ladite première ligne (4) et en ce que ladite calculatrice (1) émet des impulsions de commande (8) dans ces deux sens de ladite première ligne (4).

5- Système selon la revendication 1, caractérisé en ce que chaque transmetteur $T_i$ comporte une première porte logique (20) de type ET dont les entrées reçoivent respectivement l'impulsion de commande incidente (8) et le résultat d'une comparaison entre les informations actuelles et les informations antérieures en provenance des capteurs associés (2), un dispositif de sérialisation (9) pourvu d'une pluralité d'entrées en parallèle reliées auxdits capteurs (2) et d'une sortie série (10) reliée à ladite seconde ligne (7), une horloge (11) dont l'entrée de commande (13) de mise en marche est reliée à la sortie (21) de ladite première porte ET (20) et qui commande elle-même la mise en marche dudit dispositif de sérialisation (9) et un générateur (12) d'impulsion de commande (8) dont l'entrée (17) est reliée, à travers une première porte logique (28) de type OU, au dispositif de sérialisation 9 pour être actionné par la fin de la dernière information émise et dont la sortie (19) est connectée à la partie aval de ladite première ligne (4), ledit transmetteur $T_i$ comportant de plus une seconde porte (29) de type ET dont les entrées reçoivent respectivement l'impulsion de commande incidente (8) et la sortie inversée de ladite première porte ET (20) et dont la sortie commande ledit générateur d'impulsion (12) à travers ladite porte OU (28).

6.- Système selon la revendication 2, caractérisé en ce qu'il comporte une première porte logique (20) de type ET dont les entrées reçoivent respectivement l'impulsion de commande incidente (8) et le résultat d'une comparaison entre les informations actuelles et les informations antérieures en provenance des capteurs associés (2), une troisième porte logique (41) de type ET dont les entrées reçoivent respectivement l'impulsion de commande incidente (8) et l'ordre véhiculé par ladite troisième ligne (31), un dispositif de sérialisation (9) pourvu d'une pluralité d'entrées en parallèle reliées auxdits capteurs (2) et d'une sortie (10) reliée à ladite seconde ligne, une horloge de commande (11) dont l'entrée de commande (13) de mise en marche est reliée à la sortie d'une seconde porte logique (40) de type OU dont les entrées sont respectivement reliées aux sorties desdites première et troisième portes logiques (20) et (41), l'horloge commandant la mise en marche dudit dispositif de sérialisation (9) et un générateur (12) d'impulsion de commande (8) dont l'entrée (17) est reliée, à travers une première porte logique (28) de type OU, au dispositif de sérialisation (9) pour être actionné par la fin de la dernière information émise et dont la sortie (19) est connectée à la partie aval de ladite première ligne (4), ledit transmetteur $T_i$ comportant de plus une seconde porte (29) de type ET dont les entrées reçoivent respectivement la sortie d'une quatrième porte logique (42) de type ET et la sortie inversée de ladite seconde porte logique (40) de type OU et dont la sortie commande ledit générateur d'impulsion (12) à travers ladite première porte logique OU (28), les entrées de ladite quatrième porte logique ET recevant respectivement l'ordre inversé circulant sur ladite troisième ligne de commande (31) et l'impulsion de commande incidente (8).

7.- Système selon l'une quelconque des revendications 4 ou 5,

caractérisé en ce que ladite horloge (11) est commandée à l'arrêt à la fin de la transmission sur ladite seconde ligne (7) des informations en provenance des capteurs (2).

Fig.1

01035 14

Fig. 2

Fig. 3

Fig.4

Fig. 5

0103514

**Office européen des brevets**

## RAPPORT DE RECHERCHE EUROPEENNE

Numéro de la demande

EP  83 40 1747

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A,D | FR-A-2 159 630 (S.A. PHILIPS INDUSTRIELLE ET COMMERCIALE) * Page 3, ligne 1 - page 4, ligne 5; figures 1,2 * | 1 | F 16 B   39/38 F 16 B   39/10 B 25 B   13/06 |
| A,D | US-A-3 761 878 (GEORGET) * Colonne 2, ligne 25 - colonne 4, ligne 52; figures 1,2 * | 1 | |
| A,D | WO-A-8 101 624 (FURNEY) * Page 4, ligne 29 - page 7, ligne 14; figures 1,2 * | 1 | |
| A,D | GB-A-2 055 235 (MOLINS) * Revendications 1-4; figure 1 * | 1,4 | |
| A | FR-A-1 303 478 (COMPAGNIE GENERALE DE CONSTRUCTIONS TELEPHONIQUES) * Page 1, colonne de droite, deuxième alinéa * | 1 | **DOMAINES TECHNIQUES RECHERCHES (Int. Cl. ³)** F 16 B B 25 B |
| A | PATENTS ABSTRACTS OF JAPAN, vol. 2, no. 87, 15 juillet 1978, page 2365 M 78 & JP - A - 53 54 681 (MITSUBISHI DENKI K.K.) 18-05-1978 | 1 | |

Le présent rapport de recherche a été établi pour toutes les revendications

| Lieu de la recherche LA HAYE | Date d'achèvement de la recherche 22-11-1983 | Examinateur WANZEELE R.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant